# EUROPEAN PATENT APPLICATION

(11) **EP 2 326 125 A1**
(43) Date of publication of application: **25.05.2011**
(21) Application number: 09814065.0
(22) Date of filing: 17.09.2009
(51) Int. Cl.: H04W 36/08

(54) **METHOD AND DEVICE FOR CELLULAR HANDOVER**

(30) Priority: 22.09.2008 CN 200810222691
(71) Applicant: Huawei Technologies Co., Ltd., Longgang District, Shenzhen Guangdong 518129 (CN)
(72) Inventor: GAO, Yongqiang, Longgang District Shenzhen 518129 (CN); HE, Chuanfeng, Longgang District Shenzhen 518129 (CN); YANG, Bo, Longgang District Shenzhen 518129 (CN); MENG, Yan, Longgang District Shenzhen 518129 (CN)
(74) Representative: Kreuz, Georg Maria
(86) International application number: PCT/CN2009/074005
(87) International publication number: WO 2010/031345

(57) **Abstract**

A method and apparatus for cell handover are provided. The method includes the following steps. User equipment, UE, initiates a cell handover. If the UE is not in a downlink discontinuous reception state, the cell handover is performed when the UE is not in the downlink discontinuous reception state. If the UE is in a downlink discontinuous reception state, the UE exits the downlink discontinuous reception state and performs the cell handover when the UE is not in the downlink discontinuous reception state. The embodiments of the present invention prevent the problem that the UE cannot receive a handover indication command during the cell handover in time because the UE is in the downlink discontinuous reception state, thus reducing time delay of the cell handover, avoiding longer service interruption, and reducing the call drop rate.

## Description

The application claims the benefit of priority to Chinese Patent Application No. 200810222691.4, filed on September 22, 2008, and entitled "METHOD AND APPARATUS FOR CELL HANDOVER", which is incorporated herein by reference in its entirety.

### FIELD OF THE TECHNOLOGY

The present invention relates to the field of communications, and more particularly to a method and apparatus for cell handover.

### BACKGROUND OF THE INVENTION

For high speed packet data is characterized by asymmetry, high peak rate, short active time, and so on, in order to effectively use radio spectrum resources and increase downlink peak rate and cell throughput, high speed downlink packet access technology (HSDPA) is introduced in 3rd Generation Partnership Project (3GPP) Wideband Code Division Multiple Access (WCDMA) version R5. Accordingly, high speed physical downlink share channels are added to transmit high speed packet data shared by multiple users, and technologies such as adaptive modulation encoding and fast physical layer hybrid automatic retransmission are adopted.

In order to increase capacity of such real-time service as voice over internet protocol (VOIP) or circuit switched domain over high speed packet access (CS over HSPA) in cells, signaling service is needed to be born over a high speed downlink share channel (HS-DSCH), instead of a dedicated channel (DCH). In this way, signaling service lose a gain of a downlink macro diversity, resulting in that problems might occur in user equipment (UE) in an HS-DSCH serving cell handover process.

A Continuous Packet Connectivity (CPC) technology is introduced in WCDMA version R7, so that, during an inactive period without data transmission, a UE is enabled to remain in a connecting state with a network in a long time, and simultaneously consumes little air interface resources. In a WCDMA system, a main factor of limiting the quantity of simultaneously online users is uplink interference. In an existing WCDMA protocol, when a UE is in a dedicated channel connecting state, no matter whether there is data transmission, a dedicated physical control channel (DPCCH) of an uplink transmits control information such as power control and pilot signal. In this way, uplink interference will be brought to other users, so that the quantity of users in the connecting state is limited. Hence, the prior art increases the quantity of simultaneously online users mainly by reducing uplink interference.

In order to reduce uplink control channel interference to a UE, when the amount of uplink transmission data is low, uplink DPCCH can enter a discontinuous transmission (DTX) state. At the same time, in order to save power for a UE, when the amount of downlink transmission data is low, the UE can enter a discontinuous receiving (DRX) state. A CPC mode is indicated to be enabled or disabled by a parameter UE_DTX_DRX_Enable (TRUE for enable, FALSE for disable). Operation in the CPC is classified into a discontinuous uplink DPCCH transmission operation and a discontinuous downlink reception operation, and whether the operations are enabled or not is indicated by the parameters UL_DTX_Active and DL_DRX_Active, respectively, (TRUE or FALSE, only if the UL_DTX_Active is TRUE, and the DL_DRX_Active may be TRUE). For the discontinuous downlink reception operation, some parameters are defined in the protocol, which include UE_DRX_cycle. The UE_DRX_cycle indicates a sub-frame length of a Shared Control Channel for HS-DSCH (HS-SCCH) reception pattern (HS-SCCH reception pattern). In other words, the UE_DRX_cycle indicates the quantity of sub-frames over which a UE is allowed to monitor the HS-SCCH, and might be 4, 5, 8, 10, 16, or 20.

A technical solution for cell handover is provided in the prior art, which mainly includes the following steps. In step 1), according to an event 1A reported by the UE, a Radio Network Controller (RNC) prepares to perform handover, establish a wireless connection, and deliver cell configuration information of all active sets in a confirmation message of active sets updating, so as to update the active sets. In step 2), according to an event 1D reported by the UE, the RNC makes a handover decision, begins to perform handover by using a reconfiguration commit message of a Radio Link (RL) to activate a target cell base station (target NodeB), and indicates the UE to perform handover by using a reconfiguration command transmitted by the RNC or an HS-SCCH command transmitted by the target NodeB. In step 3), at the same time, after reporting the event 1D, the UE begins to monitor the HS-SCCH of the target NodeB. In step 4), the UE hands over to the target NodeB after receiving the HS-SCCH command of the target NodeB or the reconfiguration command of the RNC.

In the solution for cell handover provided in the prior art, if in the steps 2) and 3), the UE is being in the CPC mode (that is, the UE_DTX_DRX_Enable is TRUE), and the downlink discontinuous reception state is open (that is, the DL_DRX_Active is TRUE), at the time of the RNC transmitting the reconfiguration command or the target NodeB transmitting the HS-SCCH command, in order to guarantee that the UE is capable of receiving the reconfiguration command or the HS-SCCH command at a pattern allowed to receive, it is needed to wait for a suitable reception pattern according to the UE_DRX_cycle before transmitting the reconfiguration command or the HS-SCCH command. In this way, the time delay of a cell handover process is increased, resulting in that the service is interrupted for a long time, the call drop rate is increased, and therefore the experience of real-time service users is influenced.

In the solution for cell handover provided in the prior art, in the step 2), both the reconfiguration command transmitted by the RNC and the HS-SCCH command transmitted by the target NodeB are handover indication commands, and a network can choose to transmit only one of the both, and can choose to transmit the both. However, the prior art does not provide a particular implementation used for notifying the target NodeB to indicate the UE to make serving cell handover by means of transmitting the HS-SCCH command. When the target NodeB does not transmit the HS-SCCH command, the UE will perform the original hard handover process according to the reconfiguration command transmitted by the RNC, instead of an enhanced HS-DSCH serving cell handover process. Further, due to large time delay of the original hard handover process, advantages such as small time delay and fastness of the enhanced HS-DSCH serving cell handover process cannot be embodied.

### SUMMARY OF THE INVENTION

The embodiments of the present invention provide a method and apparatus for cell handover, so as to reduce time delay in a cell handover process.

In an embodiment, the present invention provides a method for the cell handover, which includes the following steps. User equipment (UE) initiates a cell handover. If the UE is not in a downlink discontinuous reception state, the cell handover is performed when the UE is not in the downlink discontinuous reception state. If the UE is in a downlink discontinuous reception state, the UE exits the downlink discontinuous reception state and performs the cell handover when the UE is not in the downlink discontinuous reception state.

In an embodiment, the present invention provides an apparatus for cell handover, which includes: an initiating unit, configured to initiate the cell handover; a control unit, configured to exit a downlink discontinuous reception state if a UE is in the downlink discontinuous reception state; and a handover unit, configured to perform the cell handover when the UE is not in a downlink discontinuous reception state if the UE is not in the downlink discontinuous reception state or the UE exits the downlink discontinuous reception state.

The method and apparatus for cell handover provided by the embodiments of the present invention perform the cell handover when the UE is not in the downlink discontinuous reception state, so as to prevent the problem that the UE cannot receive a handover indication command during the cell handover in time because the UE is in the downlink discontinuous reception state, thus reducing the time delay of the cell handover, avoiding the longer service interruption, and reducing the call drop rate.

### BRIEF DESCRIPTION OF THE DRAWINGS

FIG. 1 is a flow chart of a method for cell handover according to a first embodiment of the present invention;
FIG. 2 is a signaling flow chart of a method for cell handover according to a second embodiment of the present invention;
FIG. 3 is a flow chart of a method for cell handover according to a third embodiment of the present invention;
FIG. 4 is a flow chart of a method for cell handover according to a fourth embodiment of the present invention;
FIG. 5 is a flow chart of a method for cell handover according to a fifth embodiment of the present invention;
FIG. 6 is a schematic structural view of an apparatus for cell handover according to a sixth embodiment of the present invention; and
FIG. 7 is a schematic structural view of an apparatus for cell handover according to a seventh embodiment of the present invention.

### DETAILED DESCRIPTION OF THE EMBODIMENTS

The technical solutions of embodiments of the present invention with reference to the accompanying drawings are described in further detail with reference to the accompanying drawings and the embodiments.

### First Embodiment

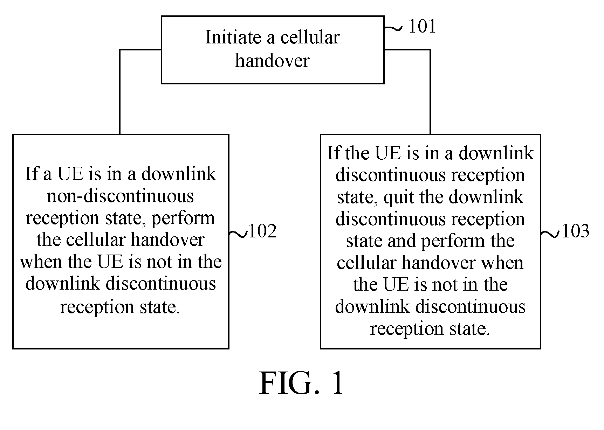

FIG. 1 is a flow chart of a method for cell handover according to a first embodiment of the present invention. The method includes the following steps.

Step 101: A UE initiates a cell handover.

Step 102: If the UE is not in a downlink discontinuous reception state, the UE performs the cell handover when the UE is not in the downlink discontinuous reception state.

Step 103: If the UE is in a downlink discontinuous reception state, the UE exits the downlink discontinuous reception state and performs the cell handover when the UE is not in the downlink discontinuous reception state.

The cell handover is performed when the UE is not in the downlink discontinuous reception state in the embodiment, so as to prevent the problem that the UE cannot receive a handover indication command during the cell handover in time because the UE is in the downlink discontinuous reception state, thus reducing the time delay of the cell handover, avoiding the longer service interruption, and reducing the call drop rate.

### Second Embodiment

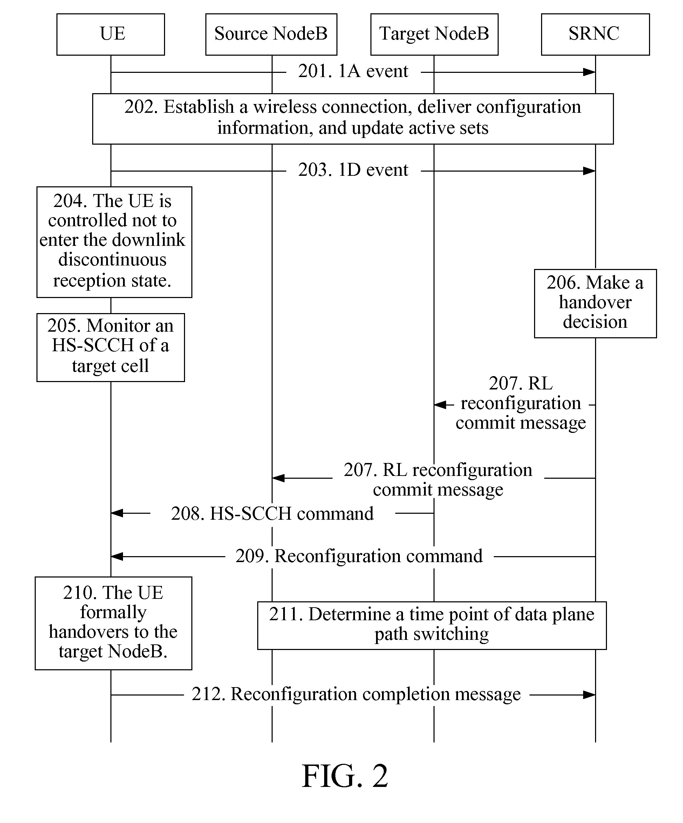

FIG. 2 is a signaling flow chart of a method for cell handover according to a second embodiment of the present invention. In this embodiment, enhanced HS-DSCH serving cell handover is taken as an example, and a serving RNC (SRNC) is engaged in the cell handover in this embodiment. The embodiment includes the following steps.

Step 201: A UE initiates the cell handover; and the UE reports a 1A event to the SRNC.

Step 202: According to the 1A event reported by the UE, the SRNC prepares to perform the handover, establish a wireless connection, and deliver cell configuration information of all active sets in a confirmation message of active sets updating, so as to update the active sets.

Configuration information includes configuration information associated with the HS-DSCH and corresponding E-DCH configuration information.

Step 203: The UE reports a 1D event to the SRNC.

Step 204: When the UE is not in the downlink discontinuous reception state (that is, DL_DRX_Active is FALSE), the UE remains not in the downlink discontinuous reception state. In other words, the UE does not enter the downlink discontinuous reception state.

When the UE is in the downlink discontinuous reception state (that is, DL_DRX_Active is TRUE), the UE exits the downlink discontinuous reception state (by setting DL_DRX_Active to FALSE) and remains not in the downlink discontinuous reception state. In other words, the UE does not enter the downlink discontinuous reception state any more.

In the embodiment, the UE can control or change its state.

Step 205: The UE monitors the HS-SCCH of a target cell.

Step 206: The SRNC makes a handover decision according to the 1D event reported by the UE.

Step 207: The SRNC activates a target NodeB and a source NodeB to begin to perform handover by using an RL reconfiguration commit message.

Step 208: The target NodeB transmits an HS-SCCH command to the UE, instructing the UE to perform the cell handover.

Step 209: The SRNC sends a reconfiguration command to the UE, and the reconfiguration command includes: a physical channel reconfiguration command, a transmission channel reconfiguration command, or a radio bearer reconfiguration command.

In the step 208 and the step 209, both the HS-SCCH command and the reconfiguration command are a handover indication command, and a network can choose to transmit only the HS-SCCH command or only the reconfiguration command, or transmit the both.

Step 210: The UE hands over to the target NodeB.

If the UE has received the HS-SCCH command delivered by the target NodeB, after 40 milliseconds upon receiving the HS-SCCH command transmitted by the target NodeB, the UE can hands over to the target NodeB to receive associated HS-PDSCH data.

If the UE has received the reconfiguration command delivered by the SRNC, the UE can perform operations based on an original Hard Handover (HHO) process.

Step 211: The SRNC determines a time point of data plane path switching according to an associated time point.

Step 212: The UE returns a reconfiguration completion message to the SRNC. If the UE processes a Radio Bearer Reconfiguration command (RBR), the reconfiguration completion message is returned based on the time specified by the RBR; otherwise, the reconfiguration completion message is returned after 40 milliseconds upon receiving the HS-SCCH command.

So far, the cell handover succeeds. In the process of performing the cell handover in step 205 to step 212 of this embodiment, the UE always remains not in the downlink discontinuous reception state, that is, the UE performs the cell handover when the UE is not in the downlink discontinuous reception state. When the SRNC transmits the reconfiguration command or the target NodeB transmits the HS-SCCH command, it is not needed to wait for a suitable reception pattern, so as to prevent the problem that the UE cannot receive a handover indication command during the cell handover in time because the UE is in the downlink discontinuous reception state, thus reducing the time delay of the cell handover, avoiding the longer service interruption, reducing the call drop rate, and promoting the experience of real-time service users.

In this embodiment, the performing sequence between the step 204 and step 202 or step 203 is not limited, and the step 204 can be performed at any time after initiating the cell handover and before performing the cell handover.

Further, in the step 204 of the embodiment, when the UE is not in the downlink discontinuous reception state or exits the downlink discontinuous reception state, a configured time can also be initiated. The performing the cell handover when the UE is not in the downlink discontinuous reception state includes: the UE performs the cell handover when the UE is not in the downlink discontinuous reception state within the configured time. After the step 212 is completed and the cell handover succeeded, but the configured time is not reached, the configured time is cancelled. When the step 212 is not performed or is not completed, but the configured time is reached, the UE is restored to the state before initiating the configured time. The configured time can be initiated by adopting a timer.

In other words, when the UE is not in the downlink discontinuous reception state, the UE cannot enter the downlink discontinuous reception state within the configured time (before the timer expires), until the cell handover succeeds. If the configured time is not reached, the configured time is cancelled. If the configured time is reached, and the UE has not completed the HS-DSCH serving cell handover process, the UE restores to not in the downlink discontinuous reception state before initiating the configured time. Next, corresponding operations can be made according to a network configuration indication. For example, according to the network indication, the UE enters the downlink discontinuous reception state, and so on.

When the UE is in the downlink discontinuous reception state, the UE exits the downlink discontinuous reception state and cannot enter the downlink discontinuous reception state within the configured time (before the timer expires), until the cell handover succeeds. If the configured time is not reached, the configured time is cancelled. If the configured time is reached, and the UE has not completed the HS-DSCH serving cell handover process, the UE restores the downlink discontinuous reception state before initiating the configured setting (according to previous continuation behavior of each DRX parameter). Next, corresponding operations can be made according to a network configuration indication. For example, according to the network indication, the UE exits the downlink discontinuous reception state, or update DRX parameters, and so on.

The configured time is generally greater than the time required for completing a normal cell handover. The method for initiating the configured time at the UE side results in that during the cell handover process or within the configured time, the UE is always not in the downlink discontinuous reception state. In the normal handover process, when the SRNC transmits the reconfiguration command or the target NodeB transmits the HS-SCCH command, it is not needed to wait for a suitable reception pattern, so as to prevent the problem that the UE cannot receive a handover indication command during the cell handover in time because the UE is in the downlink discontinuous reception state, thus reducing the time delay of the cell handover, avoiding the longer service interruption, reducing the call drop rate, and promoting the experience of real-time service users. Furthermore, when abnormality occurs in the cell handover and the handover process has not been completed within the configured time, it is possible to restore the state of the UE before initiating the configured time, so that the UE is able to perform other corresponding operations.

On the basis of the second embodiment shown in FIG. 2, an exemplary implementation is that the SRNC further transmits signaling to the target NodeB between the step 207 and the step 208. The signaling includes indication information used to indicate use of an enhanced serving cell handover process, and in time notifies a target NodeB to instruct the UE to perform the serving cell handover by transmitting the HS-SCCH command to the UE, so that in a subsequent handover process, the possibility of using the enhanced serving cell handover process is greatly increased, thus reducing the time delay in the cell handover process. Further, the signaling may be NodeB Application Part (NBAP) signaling. The NBAP signaling may be new NBAP signaling, and may include a new Information Element (IE) carrying second indication information.

On the basis of the second embodiment shown in FIG. 2, a more exemplary implementation is that the SRNC transmits signaling to the target NodeB between the step 207 and the step 210. The signaling includes first indication information used to indicate that the UE is not in a DRX state. In other words, the SRNC informs the target NodeB that the UE is currently not in the DRX state, and the handover indication command can be transmitted to the UE at any time. Further, the signaling may be NBAP signaling. The NBAP signaling may be new NBAP signaling, and may include a new IE carrying the first indication information.

In the more exemplary implementation, by transmitting the NBAP signaling to the target NodeB, the SRNC informs the target NodeB that the UE is currently not in the DRX state, and the handover indication command can be transmitted to the UE at any time, so that the target NodeB knows the state of the UE in time, thus further reducing the time delay in the handover process.

### Third Embodiment

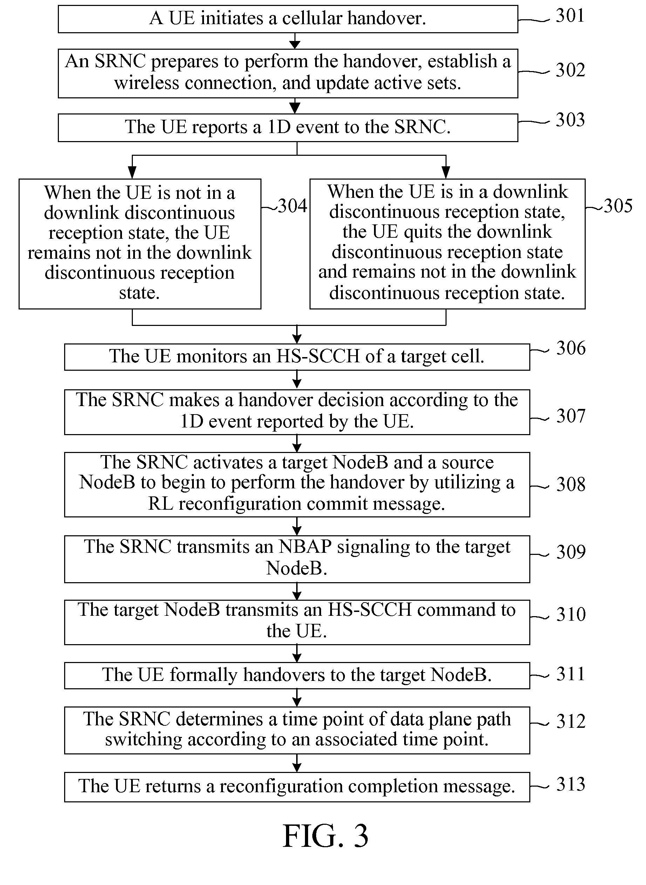

FIG. 3 is a flow chart of a method for cell handover according to a third embodiment of the present invention, and the method includes the following steps.

Step 301: A UE initiates the cell handover; and the UE reports a 1A event to the SRNC.

Step 302: According to the 1A event reported by the UE, the SRNC prepares to perform handover, establish a wireless connection, and deliver cell configuration information of all active sets in a confirmation message of active sets updating, so as to update the active sets.

The configuration information includes configuration information associated with the HS-DSCH and corresponding E-DCH configuration information.

Step 303: The UE reports a 1D event to the SRNC.

Step 304: When the UE is not in the downlink discontinuous reception state (that is, DL_DRX_Active is FALSE), the UE remains not in the downlink discontinuous reception state. In other words, the UE does not enter the downlink discontinuous reception state.

Step 305: When the UE is in the downlink discontinuous reception state (that is, the DL_DRX_Active is TRUE), the UE exits the downlink discontinuous reception state (by setting the DL_DRX_Active to FALSE) and remains not in the downlink discontinuous reception state. In other words, the UE does not enter the downlink discontinuous reception state any more.

In this embodiment, the UE can control or change its state.

Step 306: The UE monitors an HS-SCCH of a target cell.

Step 307: The SRNC makes a handover decision according to the 1D event reported by the UE.

Step 308: The SRNC activates a target NodeB and a source NodeB to begin to perform the handover by using an RL reconfiguration commit message.

Step 309: The SRNC transmits NBAP signaling to the target NodeB. The NBAP signaling includes first indication information used to indicate that the UE is not in the DRX state and second indication information used to indicate use of an enhanced serving cell handover process.

Step 310: The target NodeB transmits an HS-SCCH command to the UE, instructing the UE to perform the enhanced serving cell handover.

Step 311: The UE hands over to the target NodeB. If the UE has received the HS-SCCH command delivered by the target NodeB, after 40 milliseconds upon receiving the HS-SCCH command transmitted by the target NodeB, the UE can hands over to the target NodeB to receive associated HS-PDSCH data.

Step 312: The SRNC determines a time point of data plane path switching according to an associated time point.

Step 313: After 40 milliseconds upon receiving the HS-SCCH command, the UE returns a reconfiguration completion message.

In the step 304 and the step 305 of this embodiment, configured time can also be initiated with reference to the description about the configured time in the second embodiment.

In this embodiment, in the process of performing the cell handover, the UE always remains not in the downlink discontinuous reception state, that is, before the cell handover succeeds, the UE remains not in the downlink discontinuous reception state. When the target NodeB transmits the HS-SCCH command, it is not needed to wait for a suitable reception pattern, so as to prevent the problem that the UE cannot receive a handover indication command during the cell handover in time because the UE is in the downlink discontinuous reception state, thus reducing the time delay of the cell handover, avoiding the longer service interruption, reducing the call drop rate, and promoting the experience of real-time service users. At the same time, the NBAP signaling includes second indication information used to indicate use of an enhanced serving cell handover process, and in time notifies a target NodeB to instruct the UE to perform the serving cell handover by transmitting the HS-SCCH command to the UE, so that in a subsequent handover process, the possibility of using the enhanced serving cell handover process is greatly increased, and the time delay is reduced in the cell handover process. Furthermore, the NBAP signaling includes first indication information used to indicate that the UE is not in the DRX state. The target NodeB is informed that the UE is currently not in the DRX state, and the handover indication command can be transmitted to the UE at any time, so that the target NodeB knows the state of the UE in time, and the time delay in the handover process is further reduced.

### Fourth Embodiment

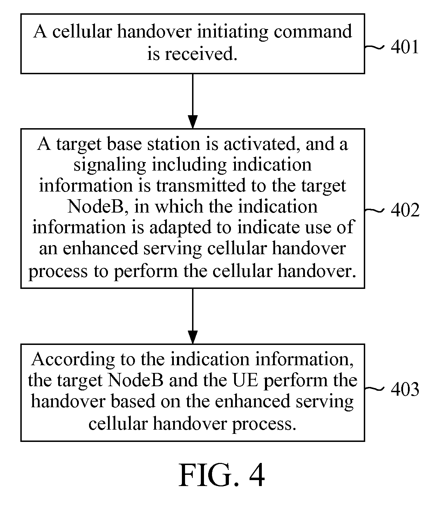

FIG. 4 is a flow chart of a method for cell handover according to a fourth embodiment of the present invention, and the method includes the following steps.

Step 401: Receive a cell handover initiating command.

Step 402: Activate target base station, and transmit signaling including indication information to the target NodeB. The indication information is used to indicate the target NodeB and a UE to use an enhanced serving cell handover process to perform the cell handover.

After the step 402, the method may further include step 403. In step 403, according to the indication information, the target NodeB and the UE perform the handover based on the enhanced serving cell handover process.

In this embodiment, the target NodeB is notified with the signaling in time to instruct the UE to perform the serving cell handover by transmitting the HS-SCCH command to the UE, so that in a subsequent handover process, the possibility of using the enhanced serving cell handover process is greatly increased, and the time delay is reduced in the cell handover process.

### Fifth Embodiment

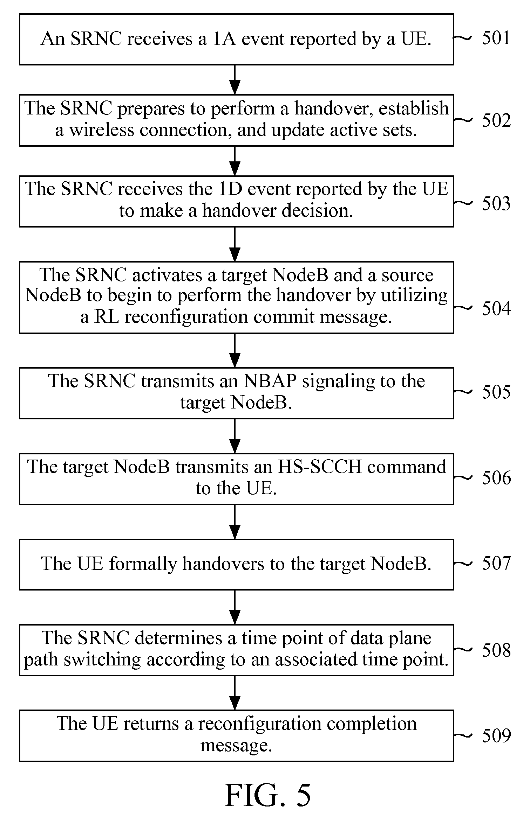

FIG. 5 is a flow chart of a method for cell handover according to a fifth embodiment of the present invention, and the method includes the following steps.

Step 501: An SRNC receives a 1A event reported by a UE.

Step 502: According to the 1A event reported by the UE, the SRNC prepares to perform handover, establish a wireless connection, and deliver cell configuration information of all active sets in a confirmation message of active sets updating, so as to update the active sets.

Step 503: The SRNC receives the 1D event reported by the UE to make a handover decision.

Step 504: The SRNC activates a target NodeB and a source NodeB to begin to perform handover by using an RL reconfiguration commit message.

Step 505: The SRNC transmits signaling including indication information used to indicate use of an enhanced serving cell handover process to the target NodeB. The signaling can be NBAP signaling. The NBAP signaling can be new NBAP signaling, and can add a new IE in the original NBAP signaling as well. The indication information is carried in the new IE.

Step 506: According to the signaling in the step 505, the target NodeB transmits an HS-SCCH command to the UE, instructing the UE to perform the enhanced serving cell handover.

Step 507: The UE hands over to the target NodeB.

Step 508: The SRNC determines a time point of data plane path switching according to an associated time point.

Step 509: After 40 milliseconds upon receiving the HS-SCCH command, the UE returns a reconfiguration completion message.

In the cell handover process of the embodiment, the target NodeB is notified with the NBAP signaling in time to instruct the UE to perform the serving cell handover by transmitting the HS-SCCH command to the UE, so that in a subsequent handover process, the possibility of using the enhanced serving cell handover process is greatly increased, and the time delay is reduced in the cell handover process.

### Sixth Embodiment

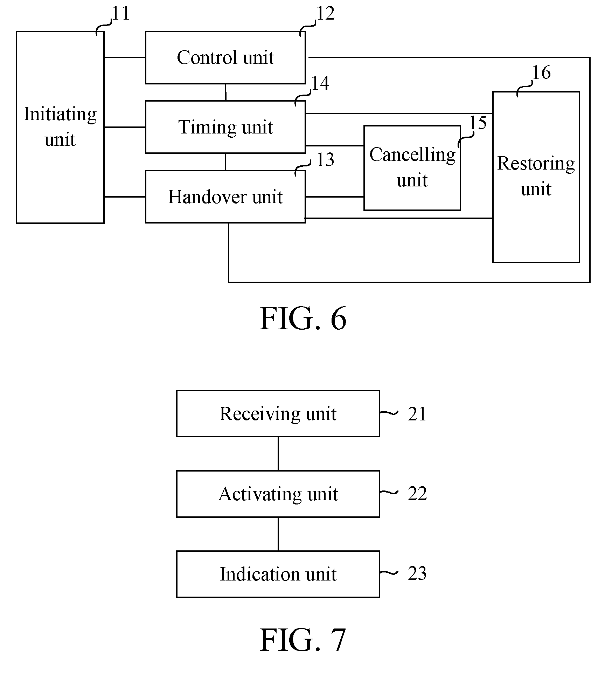

FIG. 6 is a schematic structural view of an apparatus for cell handover according to the sixth embodiment of the present invention. Particularly, the apparatus for handover of this embodiment may be a UE, which includes an initiating unit 11, a control unit 12, and a handover unit 13. The initiating unit 11 initiates the cell handover. If the UE is not in a downlink discontinuous reception state, the control unit 12 exits the downlink discontinuous reception state. If the UE is in a downlink discontinuous reception state, or after the control unit 12 controls exiting of the downlink discontinuous reception state, the handover unit 13 performs the cell handover when the UE is not in the downlink discontinuous reception state.

The handover unit 13 can also enable the UE to remain not in the downlink discontinuous reception state before the cell handover succeeds.

This embodiment can further include a timing unit 14. When the UE is not in the downlink discontinuous reception state or exits the downlink discontinuous reception state, the timing unit 14 initiates configured time. The handover unit 13 enables the UE to remain not in the downlink discontinuous reception state within a configured time.

This embodiment can further include a cancelling unit 15 or a restoring unit 16. If the cell handover succeeds within the configured time, the cancel unit 15 cancels the configured time of the timing unit 14. If the cell handover does not succeed within the configured time, the restoring unit 16 restores a state before initiating the configured time after the configured time is reached.

In the cell handover process of this embodiment, the UE can always remain not in the downlink discontinuous reception state, so that when the RNC transmits the reconfiguration command or the target NodeB transmits the HS-SCCH command, it is not needed to wait for a suitable reception pattern, so as to prevent the problem that the UE cannot receive a handover indication command during the cell handover in time because the UE is in the downlink discontinuous reception state, thus reducing the time delay of the cell handover, avoiding the longer service interruption, reducing the call drop rate, and promoting the experience of real-time service users. The time setting is initiated by the timing unit 14, so that when abnormality occurs in the cell handover, the UE can be restored the state before initiating the time setting, so as to able to perform other corresponding operations.

### Seventh Embodiment

FIG. 7 is a schematic structural view of an apparatus for cell handover according to the seventh embodiment of the present invention. Particularly, the apparatus for handover in this embodiment may be an SRNC, which includes a receiving unit 21, an activating unit 22, and an indication unit 23. The receiving unit 21 receives a cell handover initiating command. The activating unit 22 activates the target NodeB. The indication unit 23 transmits signaling including indication information to the target NodeB. The indication information is used to indicate the target NodeB and a UE to use an enhanced serving cell handover process to perform the cell handover and/or indicate that the UE is not in the downlink discontinuous reception state.

In the cell handover process of this embodiment, the indication unit 23 transmits signaling (the signaling can be NBAP signaling) including indication information used to indicate the target NodeB and a UE to use an enhanced serving cell handover process to perform the cell handover. The target NodeB is notified with the signaling in time to instruct the UE to perform the serving cell handover by transmitting an HS-SCCH command to the UE, so that in a subsequent handover process, the possibility of using the enhanced serving cell handover process is greatly increased, and the time delay is reduced in the cell handover process, and/or the indication unit 23 transmits signaling including indication information used to indicate that the UE is not in the downlink discontinuous reception state. The target NodeB is informed with the signaling that the UE is currently not in the DRX state, and a handover indication command can be transmitted to the UE at any time, thus reducing the time delay in the handover process.

Persons of ordinary skill in the art may understand that all or part of the steps of the method according to the embodiments of the present invention may be implemented by a program instructing relevant hardware. The program may be stored in a computer readable storage medium. When the program runs, the steps of the method according to the embodiments of the present invention are performed. The storage medium may be any medium that is capable of storing program codes, such as a magnetic disk, a Compact Disk Read-Only Memory (CD-ROM), a Read-Only Memory (ROM) or a Random Access Memory (RAM).

It should be noted that the above embodiments are merely provided for elaborating the technical solutions of the present invention, but not intended to limit the present invention. Although the present invention has been described in detail with reference to the foregoing embodiments, it is apparent that those skilled in the art can make various modifications and variations to the invention without departing from the scope of the invention. The invention shall cover the modifications and variations provided that they fall within the scope of protection defined by the following claims or their equivalents.

## Claims

1. A method for cell handover, **characterized in that**, the method comprises:
initiating, by a user equipment, UE, a cell handover;
if the UE is not in a downlink discontinuous reception state, performing the cell handover when the UE is not in the downlink discontinuous reception state; and
if the UE is in a downlink discontinuous reception state, exiting the downlink discontinuous reception state and performing the cell handover when the UE is not in the downlink discontinuous reception state.

2. The method for cell handover according to claim 1, wherein, the performing the cell handover when the UE is not in the downlink discontinuous reception state comprises:
remaining not in the downlink discontinuous reception state before the cell handover succeeds.

3. The method for cell handover according to claim 1, further comprising: if the UE is not in the downlink discontinuous reception state or exits the downlink discontinuous reception state, initiating a configured time;
wherein the performing the cell handover when the UE is not in the downlink discontinuous reception state comprises: performing, by the UE, the cell handover when the UE is not in the downlink discontinuous reception state within the configured time.

4. The method for cell handover according to claim 3, wherein, if the cell handover succeeds within the configured time, the method further comprises: cancelling, by the UE, the configured time after the cell handover succeeds.

5. The method for cell handover according to claim 3, wherein, if the cell handover does not succeed within the configured time, the method further comprises: restoring, by the UE after the configured time is reached, a state before initiating the configured time.

6. The method for cell handover according to claim 3, 4 or 5, wherein, the initiating the configured time comprises initiating a timer.

7. The method for cell handover according to any one of claims 1 to 5, before performing the cell handover, further comprising:
transmitting, by a wireless network controller, RNC, a signaling to a target base station, wherein the signaling comprising a first indication information used to indicate that the UE is not in the downlink discontinuous reception state.

8. The method for cell handover according to claim 7, wherein, the signaling further comprises a second indication information used to indicate use of an enhanced serving cell handover process.

9. The method for cell handover according to any one of claims 1 to 5, before performing the cell handover, further comprising:
transmitting, by an RNC, a signaling to a target base station wherein the signaling comprises a second indication information used to indicate use of an enhanced serving cell handover process.

10. An apparatus for cell handover, **characterized in that**, the apparatus comprises:
an initiating unit, configured to initiate a cell handover;
a control unit, configured to exit a downlink discontinuous reception state if a user equipment, UE, is in a downlink discontinuous reception state; and
a handover unit, configured to perform the cell handover when the UE is not in a downlink discontinuous reception state, if the UE is not in the downlink discontinuous reception state or the UE exits the downlink discontinuous reception state.

11. The apparatus for cell handover according to claim 10, wherein, the handover unit is further configured to enable the UE to remain not in the downlink discontinuous reception state before the cell handover succeeds.

12. The apparatus for cell handover according to claim 10, further comprising a timing unit, configured to initiate a configured time if the UE is not in the downlink discontinuous reception state or exits the downlink discontinuous reception state;
wherein the handover unit is further configured to enable the UE to remain not in the downlink discontinuous reception state within the configured time.

13. The apparatus for cell handover according to claim 12, further comprising a cancelling unit, configured to cancel the configured time of the timing unit if the cell handover succeeds within the configured time.

14. The apparatus for cell handover according to claim 12, further comprising a restoring unit, configured to restore the UE to a state before initiating the configured time after the configured time is reached, if the cell handover does not succeed within the configured time.
